# EUROPEAN PATENT APPLICATION

(11) **EP 1 107 243 A2**
(43) Date of publication of application: **13.06.2001**
(21) Application number: 00126301.1
(22) Date of filing: 01.12.2000
(51) Int. Cl.: G11B 7/24

(54) **Optical information recording medium**

(30) Priority: 01.12.1999 JP 34161199
(71) Applicant: Taiyo Yuden Co., Ltd., Tokyo 110-0005 (JP)
(72) Inventor: Hara, Fumi, Tokyo, 110-0005 (JP); Fujii, Toru, Tokyo, 110-0005 (JP); Okitsu, Isao, Tokyo, 110-0005 (JP); Negishi, Ryou, Tokyo, 110-0005 (JP); Hamada, Emiko, Tokyo, 110-0005 (JP)
(74) Representative: Goddar, Heinz J., Dr.

(57) **Abstract**

An optical information recording medium comprising a substrate and an overlaying optical interference layer containing a trimethine dibenzoindolenine cyanine dye of a symmetric structure is capable of recording information with a laser beam having a wavelength of 640 nm or longer at a low recording power and the recorded information can be reproduced with the same laser.

## Description

### Field of the Invention

The present invention relates to an optical information recording medium, particularly DVD-R, which is rewritable at heat mode and capable of recording and reproducing information with a laser beam having a short wavelength range.

### Background of the Invention

A recordable compact disc (CD-R) is an optical disc which is capable of recording and reproducing information of characters, figures and sounds, and it comprises a recording layer containing a dye (e.g., a cyanine dye having a pentamethine bridge) as a recording material which makes possible to record and reproduce data with a laser beam having a wavelength of 770 to 830 nm.

Recently, there have been made many efforts to develop a DVD-R (digital video disc recordable or digital versatile disc recordable) as a next generation medium because it allows more compact information storage and retrieval using a red laser beam having a wavelength of 620 to 690 nm, which is shorter than that used for a CD-R

Such an optical information recording medium in the form of a DVD-R is disclosed, e.g., in Japanese Unexamined Patent Publication Nos. 181211/1998 and 33775/2000, wherein trimethine-linked cyanine dyes are employed in the recording layer. However, the dye-containing recording layers disclosed in the above patents exhibit a low light absorbance as the wavelength of the laser beam becomes longer, which requires, for example, a very high writing power of greater than 11 mW at a wavelength of greater than 640 nm. That is, the above-mentioned DVD-Rs have the problem of poor writing sensitivity

Accordingly, there exists a need to develop an optical information recording medium having an improved writing sensitivity, together with a high reflectance, high degree of modulation, and low jitter.

### Summary of the Invention

It is, therefore, a primary object of the invention to provide an optical information recording medium having a sufficiently high writing sensitivity toward the writing laser beam used for a DVD-R, and a sufficiently high degree of modulation.

It is a second object of the invention to provide an optical information recording medium having a sufficiently low jitter and good reproduction stability.

It is a third object of the invention to provide an optical information recording medium comprising a uniform dye layer having a low jitter and a sufficient degree of modulation, the layer being formed by spin-coating a solution containing a dye whose solubility is carefully controlled.

In accordance with an aspect of the present invention, there is provided an optical information recording medium comprising a substrate and an optical interference layer deposited on the substrate, characterized in that the optical interference layer comprises a trimethine dibenzoindolenine cyanine dye, said optical interference layer being recordable with a laser beam having a wavelength of 640 nm or longer and information recorded in the medium being reproducable with a laser beam having a wavelength in the range of 620 to 690 nm.

Further, in accordance with the present invention, there is provided a method for recording and reproducing optical information, which comprises recording the information on an optical information medium having an optical interference layer comprising a trimethine dibenzoindolenine cyanine dye with a laser beam having a wavelength of 640 nm or longer, and then reproducing the information with a laser beam having a wavelength of 620 to 690 nm.

### Detailed Description of the Invention

In the present invention, the term "optical interference layer" is inclusive of a recording layer comprising at least one dye layer containing an organic dye and other layers containing other organic and inorganic materials, the dye layer being capable of forming pits when a laser beam is irradiated thereon; and additional layers for controlling the optical properties of the recording medium, for example, an enhancement layer of a resinous material having a modified refractive index or thickness and an interlayer positioned between the substrate and the dye layer, or between dye layers if a plurality of dye layers are used.

In accordance with the present invention, a compound of formula (1) is provided as a dye for fulfilling the stated objectives: 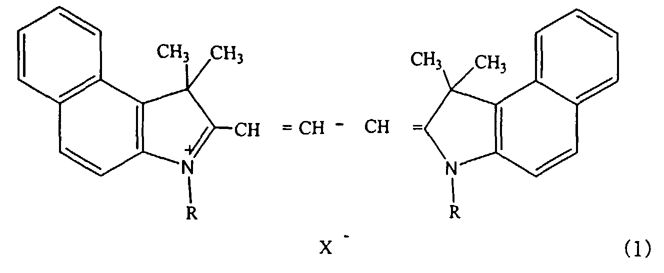 wherein,
R is a straight or branched CₙH₂ₙ₊₁, CₘH₂ₘO C₆H₅ or CₘH₂ₘC₆H₅, wherein n and m are integers in the ranges of 1 to 7 and 1 to 5, respectively, and
X⁻ is an anion selected from the group consisting of ClO₄⁻, BF₄⁻, ClO₃⁻, PF₆⁻ and SbF₆⁻.

The compound of formula (1) according to the present invention provides an optical information recording medium capable of recording and reproducing information using recording and reading laser beams having the same wavelength range. This capability is believed to be due to the structural feature of the inventive dye that the two benzoindolenine rings at both ends of the trimethine chain are symmetric, which allows the maximum absorption wavelength of the dye to shift to a longer wavelength range of greater than 640 nm. At such a long wavelength range, a high refractive index (n) (n=2∼3) and a suitable extinction coefficient (k) (k=0.02∼0.1) can be obtained in the recording process, and as a result, the writing sensitivity increases and the recording power can be reduced, e.g., to below 11 mW.

Thus, the inclusion of the compound of formula (1) in the optical interference layer causes a shift of the absorption wavelength to a longer wavelength range. While maintaining this unique feature, the optical properties of the compound of formula (1), and concomitantly the electrical properties of the optical information recording medium containing the dye, may be adjusted and fine-tuned by way of altering the substituents R and X⁻. For instance, if it is desired to obtain a higher solubility of the compound of formula (i) in the solvent used in formulating a dye solution for preparing an optical information recording medium, it is preferred that R is a straight or branched C₃₋₇ alkyl group when X⁻ is PF₆⁻ or SbF₆⁻, and R is a straight or branched C₁₋₅ alkyl group when X⁻ is ClO₄⁻, BF₄⁻ or ClO₃⁻

If the solubility of a dye is too low (< 10 g/l), it is difficult to prepare its film on the substrate and, if it is too high (> 70 g/l), the uniformity of the dye film becomes poor, rendering it difficult to obtain a high quality record. Accordingly, in order to obtain a uniform dye layer having good performance characteristics, it is preferred to adjust the solubility of the dye to within the range of 20 to 50 g/l.

Further, a dye which is to be used in a DVD-R must have good thermal properties. If the decomposition temperature of the dye is too low, the thermal stability of the dye layer becomes poor, and if it is too high, recording on the dye layer becomes difficult. Thus, for obtaining a good quality record, it is preferred to employ a dye having a decomposition temperature in the range of 240 to 290 °C.

The synthesis of the dye represented by formula (1) may be conducted by the method described in *The Chemistry of Synthetic Dyes Vol. 14.*

The inventive optical information recording medium may be prepared as below.

First, a cyanine dye of formula (1) is dissolved into a solvent and the resulting dye solution is coated on a transparent substrate to form a recording layer. Representative examples of the solvent suitable for preparing the dye solution include chloroform, dichloromethane, fluorinated alcohols and fluorine containing solvents (e.g., a fluorinated hydrocarbon); dimethylethylketone, dimethylformamide, methanol, toluene, cyclohexanone, acetylacetone, diacetone alcohol, cellosolves (e.g., methylcellosolve) and dioxane. Preferably, the cyanine dye content of the dye solution is in the range of 1 to 30 % by weight.

The substrate used in the present invention may be made of glass, or plastics such as an epoxy resin, methacryl resin, polycarbonate resin, polyester resin, polyvinyl chloride resin and polyolefin resin. The substrate may have pre-formed tracking grooves or pits on its surface, and it may also comprise address signals.

Coating of the dye solution on the substrate may be carried out by a spin coat method. The thickness of the dye layer after drying may be adjusted to the range used in the prior art.

Further, in addition to the dye compound, the recording layer of the present invention may further comprise an additional ingredient, e.g., a singlet oxygen quencher, a light absorbing agent and a radical scavenger.

On the recording layer, a reflective layer of a metallic material having a high refractive index may be suitably formed by an evaporation or sputtering method. Such a metallic material may be selected from Au, Al, Ag, Cu, Pt and an alloy thereof and the reflective layer may optionally contain other components in trace amounts. Further, for the purpose of protecting the optical information recording medium and enhancing the weather resistance thereof, a protective layer may be suitably formed on the recording layer by spin-coating a solution of a radiation-curable resin (e.g., a UV curable resin) and curing the coated film.

An optical disc is prepared as described above by sequentially depositing on a substrate an interference layer containing a dye layer, a reflective layer and a protective layer. The inventive optical disc thus prepared may be attached to another disc of the same kind, or a different kind of optical disc having an optical interference layer comprising the compound of formula (1), to obtain a double-faced disc. The step of attaching two discs together may be conducted using an adhesive, e.g., UV durable resin, cation curable resin and double-sided adhesive sheet, by a hot melt method, a spin coat method, a dispense method (an extrusion method), a screen printing method or a roll coat method.

### Preferred Embodiment of the Invention

A dye layer is formed on a polycarbonate substrate as an optical interference layer by using a compound of formula (1) wherein R is a lower alkyl group, more preferably a C₄₋₅ straight or branched alkyl group, and X⁻ is an anion selected from the group consisting of ClO₄⁻, PF₆⁻ and SbF₆⁻.

Owing to its structural feature that the two benzoindolenine rings bound to both ends of the trimethine chain are symmetric, the compound of formula (1) has a high refractive index (n) (n=2∼3) and a suitable extinction coefficient (k) (k=0.02∼0.1) with respect to a laser beam having a wavelength of 650 nm, and for this reason an optical interference layer comprising the compound of formula (1) has an enhanced writing sensitivity. Further, it is possible to control the solubility and the decomposition temperature of the inventive dye by varying R and X⁻ within the scope defined above. Therefore, in accordance with the present invention, a dye layer having a good uniformity, a sufficient degree of modulation and a low jitter can be obtained.

The following Examples are given for the purpose of illustration only and are not intended to limit the scope of the invention.

### Example 1

A polycarbonate resin was injection-molded to form a disc-shape transparent substrate having a thickness of 0.6 mm and a diameter of 120 mmφ and having a spiral groove pre-formed on its surface with a width of 0.32 µm, a depth of 100 nm and a pitch of 0.74 µm.

Subsequently, a trimethine cyanine dye of formula (1) wherein R is n-C₄H₄, X is ClO₄⁻ (1,1'-di-n-butyl 3,3,3',3'-tetramethyl-4,5,4',5'-dibenzoindocarbocyanine perchlorate) was dissolved in 4-hydroxy-4-methyl-2-pentanone (a product of Kanto Kagaku Co., Ltd.) (hereinbelow, "DAA") to a concentration of 15 mg/ml, and the resulting dye solution of the cyanine dye was spin-coated on the surface of the substrate to form an optical interference layer made of a photosensitive dye film having a thickness of 50 nm.

On the optical interference layer, Au was sputtered on the area within the range of 44 mmφ to 117 mmφ of the substrate to form a reflective film layer having a thickness of 80 nm.

Further, a UV curable resin SD-211 (a product of Dainippon Ink and Chemicals Inc.) was spin-coated on the reflective layer, and cured by UV-irradiation to form a protective layer having a thickness of 5 µm.

Then, on the area encompassing the protective layer and the interference layer not coated with the protective layer, a solution of a UV curable resin SD-640 (a product of Dainippon Ink and Chemicals Inc.) was applied, another substrate prepared as above was placed thereon such that the two substrates face each other, and then subjected to a spin coating procedure to allow the resin solution to spread in the space between two substrates and form an adhesive resin layer having a thickness of 25 µm on the area within the range of 32 mmφ to 120 mmφ of the substrate. The adhesive layer was irradiated with UV light, to obtain a double-faced optical disc.

EMF signals were recorded on the optical disc thus obtained, using DDU-1000 having a NA (numerical aperture) of 0.6 and a laser wavelength of 655 nm (a recorder of Pulstech Industrial Co., Ltd.) at a linear speed of 3.5 m/sec, and then this optical disc was played back using the same apparatus, to evaluate its performance characteristics.

The result is shown in Table 1.

### Examples 2 and 3

The procedure of Example 1 was repeated except for using compounds of formula (1) having different R and X⁻, as in Table 1.

The evaluation results obtained for these optical discs are shown in Table 1.

**Table 1**

| | Compound of formula (1) | | Evaluation Result | | |
|---|---|---|---|---|---|
| Ex. | R | X⁻ | Recording Power (mW) | DC jitter (%) | Degree of modulation (%) |
| 1 | n-C₄H₉ | PF₆⁻ | 9.5 | 9.5 | 59.4 |
| 2 | n-C₅H₁₁ | PF₆⁻ | 9.8 | 9.3 | 58.7 |
| 3 | n-C₅H₁₁ | SbF₆⁻ | 9.5 | 9.5 | 51.1 |

### Comparative Examples 1 to 5

The procedure of Example 1 was repeated except that various dye compounds represented by formula (2) were employed in the formation of the dye layer:

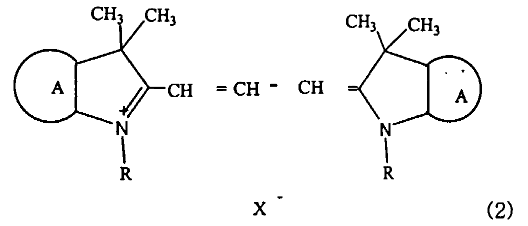

The evaluation results obtained for these optical discs are shown in Table 2.

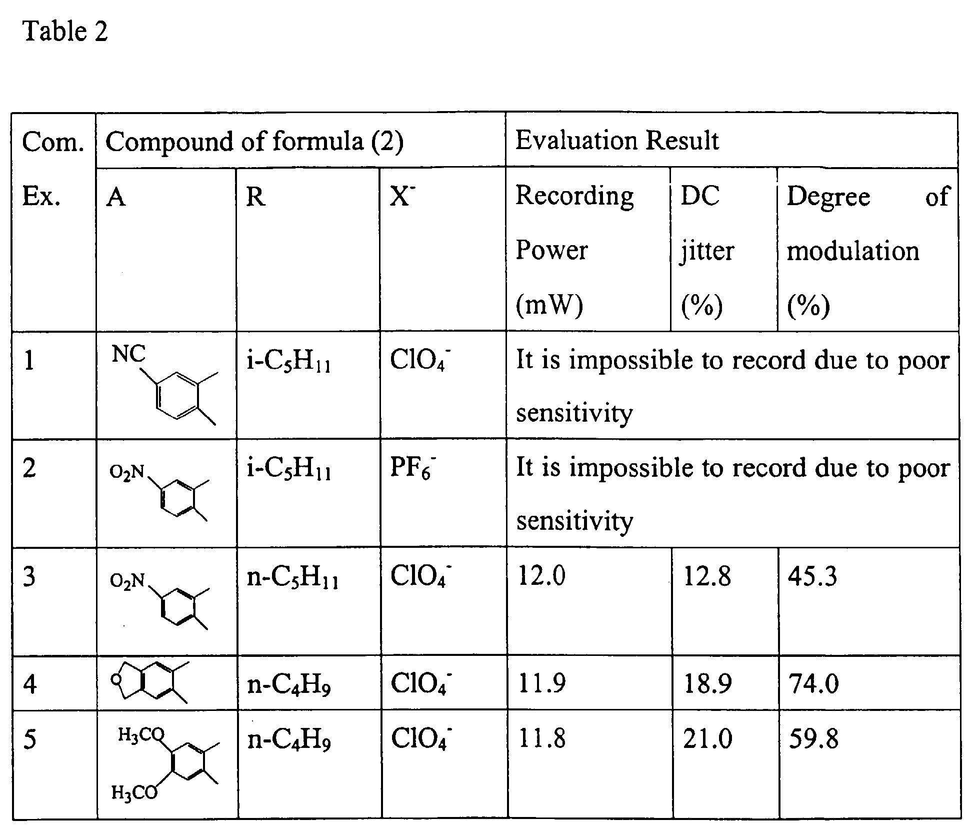

As is clear when one compares the results in Tables 1 and 2, the inventive optical discs containing the dye compounds of formula (1) require a recording power of less than 10 mW and have a DC jitter value below 9.5 %, while the optical discs according to the prior art exhibit a recording power of greater than 10 mW and a DC jitter value of greater than 12.5 %. Therefore, the inventive optical discs are superior to those of the prior art optical discs in terms of the recording power and the jitter percentage. It is believed that such excellent performance characteristics of the inventive discs stem from the unique structure of the compound of formula (1), wherein two identical benzoindolenine rings are attached to both ends of the trimethine chain in a symmetric manner.

The inventive optical disc also has a high degree of modulation, comparable to those of the prior art optical discs. As the inventive disc has a high degree of modulation and a low jitter, its reproduction sensitivity is greatly enhanced.

While the invention has been described in connection with the above specific embodiments, it should be recognized that various modifications and changes may be made to the invention by those skilled in the art without departing from the scope of the invention as defined by the appended claims.

The features disclosed in the foregoing description and in the claims may, both separately and in any combination thereof, be material for realising the invention in diverse forms thereof.

## Claims

1. An optical information recording medium comprising a substrate and an optical interference layer deposited on the substrate, characterized in that the optical interference layer comprises a trimethine dibenzoindolenine cyanine dye, said optical interference layer being recordable with a laser beam having a wavelength of 640 nm or longer and information recorded in the medium being reproducable with a laser beam having a wavelength in a range of 620 to 690 nm.

2. The optical information recording medium of claim 1, wherein the trimethine dibenzoindolenine cyanine dye is a compound of formula (1): 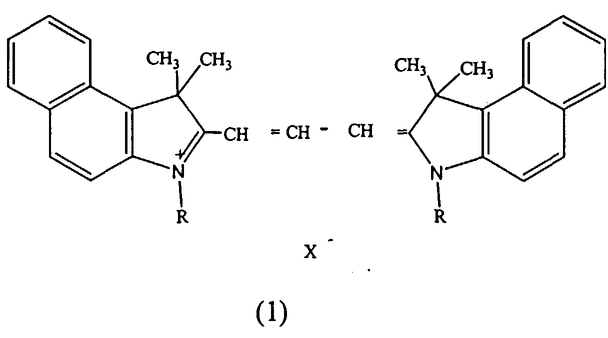 wherein,
R is a straight or branched CₙH₂ₙ₊₁, CₘH₂ₘO C₆H₅ or CₘH₂ₘC₆H₅, n and m being integers in the ranges of 1 to 7 and 1 to 5, respectively, and
X⁻ is an anion selected from the group consisting of ClO₄⁻, BF₄⁻, ClO₃⁻, PF₆⁻ and SbF₆⁻.

3. The optical information recording medium of claim 1 or 2, wherein the dye has a refractive index of 2∼3 with respect to a laser beam having a wavelength of 650 nm.

4. The optical information recording medium of claim 1, 2 or 3, wherein the dye has an extinction coefficient of 0.02∼0.1 with respect to a laser beam having a wavelength of 650 nm.

5. The optical information recording medium of claim 1, 2, 3 or 4, wherein the dye has a solubility of 20 to 50 g/l in a solvent.

6. The optical information recording medium of claim 1, 2, 3, 4 or 5 wherein the dye has a decomposition temperature ranging from 240 to 290 °C.

7. A method for recording and reproducing optical information, which comprises recording the information on an optical information medium having an optical interference layer comprising a trimethine dibenzoindolenine cyanine dye with a laser beam having a wavelength of 640 nm or longer, and then reproducing the information with a laser beam having a wavelength of 620 to 690 nm.
